# EUROPEAN PATENT SPECIFICATION

(11) **EP 1 934 131 B1**
(45) Date of publication and mention of the grant of the patent: **19.05.2010**
(21) Application number: 06784136.1
(22) Date of filing: 01.09.2006
(51) Int. Cl.: B67D 7/32, F16N 31/00

(54) **INFLATABLE COLLECTING CONTAINER**
AUFBLASBARER SAMMELBEHÄLTER
RECIPIENT COLLECTEUR GONFLABLE

(30) Priority: 07.09.2005 SE 0501970
(43) Date of publication of application: 25.06.2008
(73) Proprietor: Arvidsson, Sven, 424 42 Angered (SE)
(72) Inventor: Arvidsson, Sven, 424 42 Angered (SE)
(74) Representative: Bergentall, Annika Maria
(86) International application number: PCT/SE2006/001004
(87) International publication number: WO 2007/030058

(56) References cited:
- EP-A- 1 437 541
- DE-A1- 2 851 093
- DE-A1- 19 742 873
- DE-A1- 19 846 929
- US-A- 2 854 049
- US-A- 5 099 872
- US-A- 5 339 872
- US-A- 5 516 318
- US-A- 5 620 018
- US-A- 5 819 819
- US-A- 5 988 427

## Description

### FIELD OF INVENTION

The invention presented relates to an inflatable, portable, flexible, foldable collecting container for the collecting of wasted oil and chemicals, in the event of accidental spillage or leakage from heavy industrial machines. The container is equipped with an inner, chemical resistant container. The two containers are connected by a common drain connection in the lower part and by a band in the upper part. The container is also equipped with handles for carrying and loops for lifting.

### BACKGROUND OF THE INVENTION

Earlier know equipment for taking care of waste oil and spillage of chemicals is primarily focused on so called absorbents and simple collecting receptacles.

An inflatable container for the collecting of waste oil is described in US-A 5,099,872. This particular device consists of an inflatable container equipped with a draining and emptying device for the disposal of the collected chemicals.

This known device suffers from, amongst other things, the following drawbacks:
- It is almost impossible to transfer the chemicals collected in the collecting container to a separate container if the ground has a sloping angle.
- It is almost impossible to move or lift the container because handles for carrying and loops for lifting are missing.
- Lack of filter etc., thus making it impossible to recycle the chemicals collected
- Lack of the option for collecting hot, alternately aggressive and corrosive chemicals

US-A 5,620,018 shows another earlier known inflatable container. The device comprises a gas cylinder filled with compressed gas that is supposed to expand and thereby inflate the container. Also, this known device suffers from, amongst other things, the following drawbacks:
- It is almost impossible to transfer the chemicals collected in the collecting container to a separate container if the ground has a sloping angle.
- It is almost impossible to move or lift the container because handles for carrying and loops for lifting are missing.
- Lack of filter etc., thus making it impossible to recycle the chemicals collected
- Lack of the option for collecting hot, alternately aggressive and corrosive chemicals

US-A 5,988,427 shows another earlier known inflatable container. The device is meant to be rapidly inflatable in the case of a spillage of chemicals. This, earlier known device, comprises a valve/coupling for the purpose of connecting it to the pneumatic air system of the vehicle, thereby using the vehicles own compressed air to inflate the device. This known device also suffers from, amongst other things, the following drawbacks:
- The device can only be used on vehicles that have a pneumatic air system
- It is almost impossible to transfer the chemicals collected in the collecting container to a separate container if the ground has a sloping angle.
- It is almost impossible to move or lift the container because handles for carrying and loops for lifting are missing.
- Lack of filter etc., thus making it impossible to recycle the chemicals collected
- Lack of the option for collecting hot, alternately aggressive and corrosive chemicals

### SUMMARY OF THE INVENTION

The purpose of the invention is to solve above named problems and to facilitate the transportation of collected waste and recycling of chemicals.

The main objective of the invention presented is therefore to solve the above stated problems and to present a simple and effective system for the collecting of oil and chemicals. In addition the invention can be made suitable for the collecting and/or recycling of oil from the breakdown of heavy industrial machinery.

Another objective of the invention is to create a device that is portable, reusable, and has a low weight in relation to its volume.

These objectives are achieved by the collecting container (1) invention presented here. The invention comprises an outer bag/frame that is designed to form a containment area by means of inflatable sections (2), and a drain valve to remove/drain the oil or chemicals from the outer or inner container.

The collecting container, presented here, is characterized by being equipped with gadgets for raising and lowering the air pressure in the stated limited space formed by the sectional walls of the outer container, so that a rigid collecting container can quickly be made. When filled, the air in the sectional walls can be released, allowing the container, when lifted, to form itself to the natural shape of a pear drop, thereby allowing the forces induced by the weight of the collected chemicals, to be evenly distributed to the lifting loops of the container. If there is a need for simplified cleaning of the container, or if the temperature of the fluids collected is high, or if the chemicals collected are aggressive and corrosive, then an inner bag/container, made of suitable material, can be fitted inside and connected to the draining valve at the bottom of the outer container and to the strings or bands or zipper at the top of the outer container.

The purpose of the exhaust valve is to allow the air that was used to inflate the wall sections of the collecting container to be released, making the container, when lifted, form itself to the natural state of a pear drop, thereby allowing the forces induced by the weight of the collected chemicals to be evenly distributed to the lifting loops of the container. This will make it possible to allow all collected fluid to be drained from the container via the drain valve located at the bottom of the container.

The invention presented here is aimed at, for example, being part of the procedure for the collecting of waste oil, or similar waste fluids, from heavy construction equipment, gaff trucks, trucks, forestry machines etc.

### BRIEF DESCRIPTION OF DRAWINGS

FIG 1 shows the collapsed and folded view of the invention.
FIG 2 shows an overhead view of the invention when activated/inflated.
FIG 3 is a view taken on the cross section 1-1 (see fig. 2) that shows the additional internal, flexible container of the invention.
FIG 4 is a view taken on the cross section 1-1 showing the device without the additional internal container but with an additional filter at the drain valve. This embodiment is not part of the invention.
FIG 5 shows the invention folded and tied.
FIG 6 shows the invention when lifted.
FIG 7, 8 & 9 show different versions of the invention.
FIG 10 the cross section 2-2 (see fig. 2) shows the container's drain valve.
FIG 11 is an enlarged view of the section (2-2) showing the connecting of the inner and outer containers' drain valves.
FIG 12 & 13 is a cross section of how the drain valve(s) are connected to the filter

### DESCRIPTION OF THE PREFERRED EMBODIMENT OF THE INVENTION

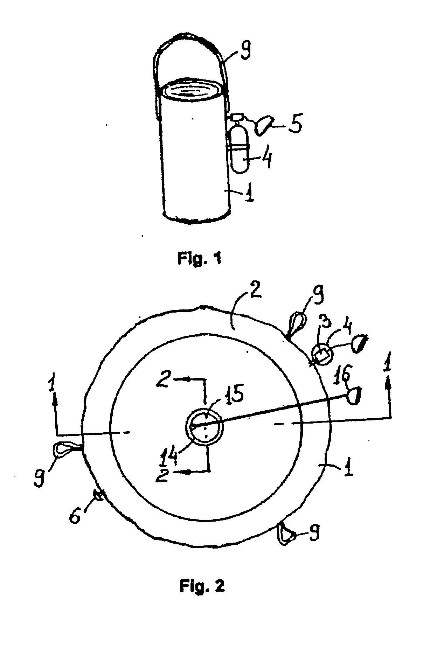

FIG 1 illustrates how the collecting container (1) is folded together and how its pressurized gas cylinder (4) is connected to its release handle (5). Storage space requirement is minimal. The invention can, for example, be stored in the driver's cab by the side of the driver's chair or beneath.

FIG 2 shows a view from above of the inflated collecting container. The walls of the container (2) are inflated by means of a valve (3) that occurs when the gas cylinder (4) has been activated by the release handle (5). FIG 2 also shows the exhaust valve (6) that is to be used for emptying the inflatable sectional wall (2) when lifting and transporting the collecting container. The container is equipped with lifting loops (9) for lifting and transportation. The drain valve (14) is covered with, for example, a partially glued covering sheet/membrane made of the same or similar material as the rest of the container. When draining the collecting container, the covering sheet/membrane is lifted by means of the string and handle (16) thereby opening the valve.

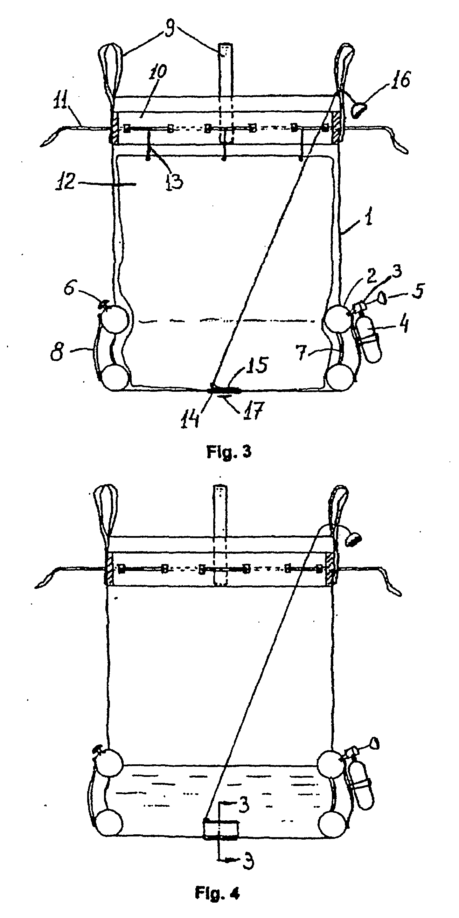

FIG 3 shows the cross section 1-1 (see FIG 2) and also shows the additional inner container (12) that can be added, for instance, for the collection of hot or corrosive chemicals. The collecting container (1) is shown with two inflatable wall sections (2) that are connected to each other by an air channel (7).

The wall sections (2) are connected by way of at least one valve (3) to the pressurized gas cylinder (4) that can be activated with the release handle (5). The wall sections (2) can, when lifting of the container is required, be emptied from air via one or more exhaust valves (6).

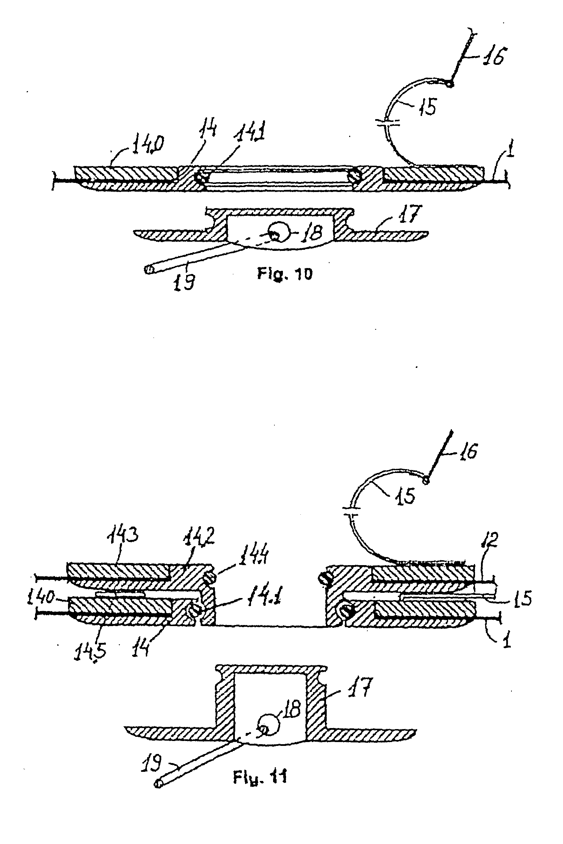

The collecting container (1) is at the top equipped with a flexible sealing fillet (10) made of a very flexible material, for example, some kind of sponge rubber or some kind of elastic polymer, and a string/band (11) to tie the container before it is transported away. The inner container, used for special purposes and needs (12), is tied at the top with its string/band (13) and string/band (11). The inner container is connected at the bottom via valve (14.2) (see FIG 10) to valve (14). When connected in this manner, device 16 will open the drain valve (14) and (14.2).

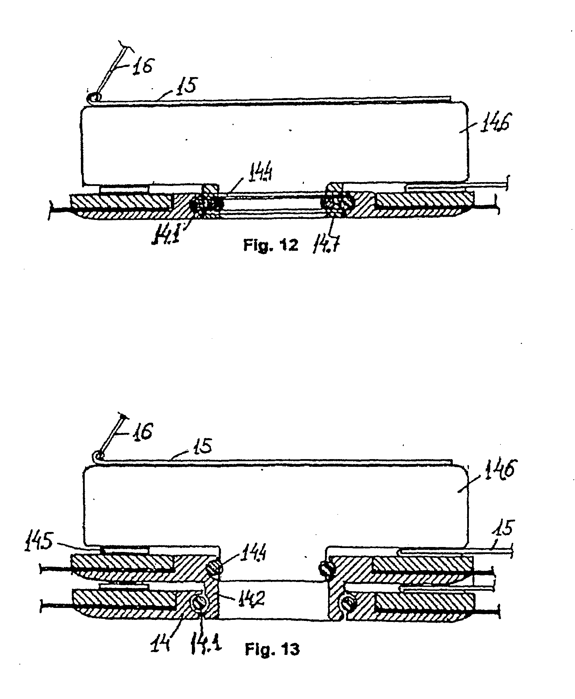

FIG 4 shows the cross section 1-1 (see FIG 2) of a single collecting container which is not part of the invention, without the additional inner container, and a filter (14.6). The cross section of the filter 3 - 3 is shown in greater detail in FIG 12.

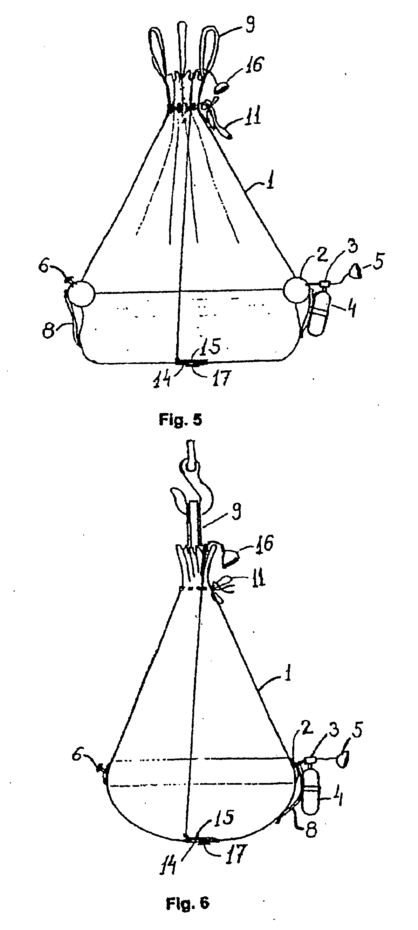

FIG 5 shows a collecting container (1) tied with a string/band (11) just before it is about to be lifted and transported away.

FIG 6 shows the collecting container having been lifted by the lifting loops (9) and the air in wall sections 2 having been evacuated via the exhaust valve (6).

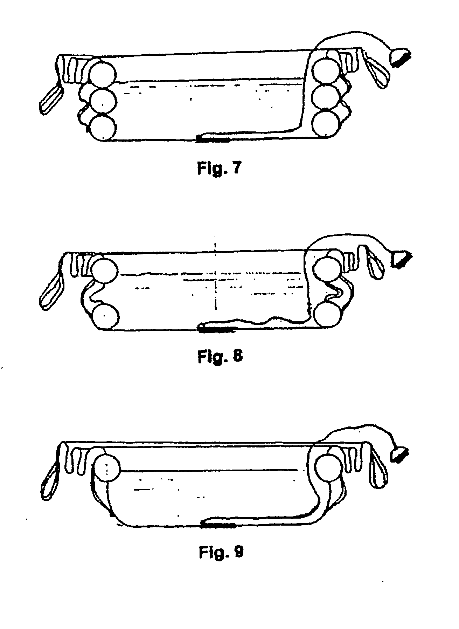

FIG 7, FIG 8, and FIG 9 show various designs of the collecting container, namely that the collecting container can have optional numbers of wall sections such as one, two or multiple sections as an optional configuration. In other words, the collecting container can be made round, square, rectangular and so forth, and continue to achieve the stated task.

FIG 10 shows the cross section 2-2 (see FIG 2) of the drain valve (14). The drain valve (14) is preferably a circular ring welded to the bottom of the collecting container 1 by means of a supporting ring (14.0). The flexible lid (15) is welded to one side of ring (14.0). To seal the rest of the contact surface between the flexible lid (15) and the rings (14) and (14.0), it is possible to use, for instance, glue or double adhesive tape. This creates a fluid/chemical tight design that can easily be opened with the help of a string and the release handle (16). In order to protect the drain valve while sliding the connecting container, for instance, on the ground over dirt, gravel or other rough and uneven surfaces, the valve (14) has been fitted with an easily removable lid/cover (17) which is attached to the valve (14) with an O-ring (14.1). The lid/cover (17) is equipped with a string/band (19) to allow a rapid and easy opening of the drain valve (14).

FIG 11 shows the cross section 2-2 from FIG 2 of the drain valve (14) connected to the drain valve (14.2) that forms the lowest part of the additional inner container (12). As shown in FIG 11, the inner container (12) must be equipped with a drain valve (14.2) of its own and that will fit to the drain valve (14) and that is easily connected to the collecting container (1) by means of the flexible O-ring (14.1). The drain valve (14.2) is equipped with a lid (17) of its own and a flexible lid/cover of its own and is connected with a string and release handle (16).

FIG 12 and FIG 13 show cross section 3-3 (see FIG 4) where it is schematically visible that different filters (14.6) can be connected to the drain valve (14) alternatively (14.2) by means of the flexible ring (14.1) alternatively the ring (14.4). The filter (14.6) is equipped with the same type of flexible draining lid (15), glued to the inlet of the filter and tied to the release handle (16) by means of a string.

The flexible lid (15) of the collecting container (1), alternatively of the collecting container (12), is folded away so that filtering equipment (14.6) can be applied on the drain valve (14) alternatively (14.2) with its compensating ring (14.5). The compensating ring is a simple distance ring made of suitable material such as polyurethane or another material with both surfaces glued with double adhesive tape or glue and which has the purpose of evening out differences in levels between different connecting devices where the flexible lid (15) is folded away to the side of the drain valve.

The collecting container (1) will preferably be made of laminate polyurethane and woven fabric or a similar material. The inner container (12) can be made, for example, of a thin material such as Teflon or a similar material that is resistant to aggressive and corrosive chemicals. Both collecting containers can easily be rinsed with suitable cleaning solutions and used again.

With adequate dimensions and proper design of the collecting container, immediate action can be taken when an accidental spillage occurs. With one hand the operator holds the pressurized gas cylinder (4) that is firmly connected to the folded collecting container (1), and with the other hand the operator pulls the release handle (5). The result is that the sectional walls of the collecting container (2) will inflate and the collecting container will be ready to be placed beneath the leaking object. With the help of the 2 or more handles (8), which are bands welded to the circumference of the collecting container 1, the now filled collecting container can be moved sideways to a more suitable position for lifting and transportation away.

It is to be understood that the description of the invention given in this document and the drawings that are attached to it, have the sole purpose of visualizing the invention, and that the device can be modified and altered so it will divert from what earlier has been described in this document. As an example, the frame of the device can be square, rectangular, or can be manufactured to any elective form, size or volume. The shape of the collecting container is adapted to the needs of present situations, allowing the invention to be used for many purposes. The principal function of the device can also be applied as an auxiliary device to improve earlier known techniques, such as when the lower part of the container is connected to a filter, the container is used as a device for filtering.

In consequence, it will be obvious to those with knowledge of the subject, that the invention may be modified and altered and thereby be different from the particulars of the invention that are shown in the attached drawings. Therefore, the protection afforded to this invention should only be limited in accordance with the scope of the following claims.

## Claims

1. A foldable, flexible collecting container (1) comprising a frame that is designed to form a defined space by means of inflatable sections (2), and a drain valve (14) to remove/drain the oil or chemicals from the container, the container being **characterized by** including an inner, easily connectable, flexible container (12) provided with a drain valve, whereby the drain valve of the inner container is connected to the drain valve of the outer container (14), and a string/band/rope and handles (16), for lifting a sealing lid (15) are operable for emptying the container from oil, chemicals or other fluids collected.

2. A container according to claim 1 which is equipped with a valve for the purpose of draining the container (14) and/or (14.2) making a connection to other accessories, such as filters, making possible the quick and efficient filtering of potential contaminations, e.g. oil and chemicals, from the collected fluid.

3. A container according to claims 1 and 2 which is equipped with a rope or band (11) and a flexible sealing fillet (10) for the elimination of further spillage when the container is transported or moved when filled.

4. A container according to claims 1,2 and 3 which is equipped with two or more loops (9) for the purpose of making it easy to lift and/or carry and/or transport the container when the container is filled.

5. A container according to claims 1,2,3 and 4 which is equipped with two or more handles (8) for the purpose of making it easy to lift and/or carry and/or transport the empty/full container sideways/horizontally.

6. A container according to claim 1,2,3,4 and 5 which is equipped with one or more connecting valves (3) for the purpose of quick and easy connection to the pressurized gas cylinder (4), alternatively by pipe to a vehicle's own pneumatic air system.

7. A container according to claims 1,2,3,4,5 and 6 which is equipped with one or more discharge valves (6) for the fast discharge of air from the inflatable wall sections (2) for the purpose of making it easy to transport the container and to drain/empty the container of the collected fluid, e.g. oil or chemicals.

8. A container according to claim 1 which is made of a laminate polyurethane and woven fabric and that it can be used as a collecting container, for the collection of accidentally spilled fluids, for example water, oil, chemicals or other hazardous fluids.

9. A container according to claim 1 whereby the inner container (12), is made of a suitable chemical resistant material such as Teflon.

10. A container according to claim 1 whereby the drain valve (14), alternatively, enables the connection of additional accessories such as a sealing plug or lid (17) with its removable rope / band.

## Patentansprüche

1. Faltbarer, flexibler Sammelbehälter (1), umfassend einen Rahmen, der derart konstruiert ist, dass er mittels aufblasbarer Sektionen (2) einen definierten Raum bildet, und ein Ablassventil (14), um das Öl oder die Chemikalien aus dem Behälter zu entfernen/ablaufen zu lassen, wobei der Behälter **dadurch gekennzeichnet ist, dass** er einen inneren, leicht verbindbaren, flexiblen Behälter (12) umfasst, der mit einem Ablassventil versehen ist, wobei das Ablassventil des inneren Behälters an das Ablassventil des äußeren Behälters (14) angeschlossen ist, und eine Schnur/ein Band/ein Seil und Griffe (16) zum Anheben eines Dichtungsdeckels (15) betätigbar sind, um den Behälter von Öl, Chemikalien oder anderen gesammelten Fluiden zu entleeren.

2. Behälter nach Anspruch 1, der mit einem Ventil zum Zweck des Ablassens des Behälters (14) und/oder (14.2) ausgestattet ist, das einen Anschluss an andere Zusatzeinrichtungen, wie etwa Filter, herstellt, die es möglich machen, potentielle Verunreinigungen, z.B. Öl und Chemikalien, schnell und effizient aus dem gesammelten Fluid zu filtern.

3. Behälter nach den Ansprüchen 1 und 2, der mit einem Seil oder einem Band (11) und einer flexiblen Dichtleiste (10) für die Beseitigung weiterer Verschüttung ausgestattet ist, wenn der Behälter befüllt transportiert oder bewegt wird.

4. Behälter nach den Ansprüchen 1, 2 und 3, der mit zwei oder mehr Schlaufen (9) zu dem Zweck ausgestattet ist, es leicht zu machen, den Behälter, wenn der Behälter befüllt ist, anzuheben und/oder zu befördern und/oder zu transportieren.

5. Behälter nach den Ansprüchen 1, 2, 3 und 4, der mit zwei und mehr Griffen (8) zu dem Zweck ausgestattet ist, es leicht zu machen, den leeren/vollen Behälter seitlich/lnorizontal anzuheben und/oder zu befördern und/oder zu transportieren.

6. Behälter nach Anspruch 1, 2, 3, 4 und 5, der mit einem oder mehreren Anschlussventilen (3) zu dem Zweck eines schnellen und leichten Anschlusses an den Druckgaszylinder (4), alternativ durch ein Rohr an ein fahrzeugeigenes Druckluftsystem ausgestattet ist.

7. Behälter nach den Ansprüchen 1, 2, 3, 4, 5 und 6, der mit einem oder mehreren Austragsventilen (6) für das schnelle Austragen von Luft aus den aufblähbaren Wandsektionen (2) zu dem Zweck ausgestattet ist, es leicht zu machen, den Behälter zu transportieren und den Behälter von dem gesammelten Fluid, z.B. Öl oder Chemikalien, abzulassen/zu entleeren.

8. Behälter nach Anspruch 1, der aus einem Laminatpolyurethan und Webstoff hergestellt ist und der als ein Sammelbehälter für das Sammeln von versehentlich verschütteten Fluiden, beispielsweise Wasser, Öl, Chemikalien oder anderen gefährlichen Fluiden, verwendet werden kann.

9. Behälter nach Anspruch 1, wobei der innere Behälter (12) aus einem geeigneten chemisch beständigen Material, wie etwa Teflon, hergestellt ist.

10. Behälter nach Anspruch 1, wobei das Ablassventil (14) alternativ den Anschluss von weiteren Zusatzeinrichtungen, wie einem Dichtungsstopfen oder -deckel (17) mit seinem entfernbaren Seil/Band ermöglicht.

## Revendications

1. Contenant de récupération (1) flexible et pliable comprenant une armature qui est conçue pour former un espace délimité au moyen de sections gonflables (2), et une valve de vidange (14) pour vider/purger l'huile ou les produits chimiques hors du contenant, le contenant étant **caractérisé en ce qu'**il comprend un contenant flexible interne (12), facilement raccordable, prévu avec une vanne de vidange, dans lequel la vanne de vidange du contenant interne est raccordée à la vanne de vidange du contenant externe (14), et dans lequel une cordelette/bandelcorde et des poignées (16) pour soulever un couvercle de fermeture (15) peuvent être actionnées pour vider le contenant de l'huile, des produits chimiques ou autres fluides récupérés.

2. Contenant selon la revendication 1, lequel est équipé d'une vanne pour vidanger le contenant (14) et/ou (14.2), en établissant une connexion avec d'autres accessoires, tels que des filtres, permettant la filtration rapide et efficace des contaminants potentiels, par exemple de l'huile et des produits chimiques, des fluides récupérés.

3. Contenant selon les revendications 1 et 2, lequel est équipé d'une corde ou d'une bande (11) et d'un filet flexible de fermeture (10) pour éliminer tout débordement supplémentaire lorsque le contenant est transporté ou déplacé une fois rempli.

4. Contenant selon les revendications 1, 2 et 3, lequel est équipé de deux boucles (9) ou plus afin qu'il soit facile de soulever et/ou de porter et/ou de transporter le contenant lorsqu'il est rempli.

5. Contenant selon les revendications 1, 2, 3 et 4, lequel est équipé de deux poignées (8) afin qu'il soit facile de soulever et/ou de porter et/ou de transporter latéralement/horizontalement le contenant rempli/vide.

6. Contenant selon les revendications 1, 2, 3, 4 et 5, lequel est équipé d'une ou plusieurs vannes de mise en circuit (3) afin de pouvoir le raccorder rapidement et facilement à une bouteille de gaz comprimé (4), alternativement par une conduite au propre système pneumatique d'un véhicule.

7. Contenant selon les revendications 1, 2, 3, 4, 5 et 6. lequel est équipé d'une ou plusieurs vannes de purge (6) pour la purge rapide de l'air des sections de parois gonflables (2) afin que le contenant soit facile à transporter et pour purger/vider le contenant des fluides récupérés, par exemple l'huile ou les produits chimiques.

8. Contenant selon la revendication 1, lequel est fabriqué en un stratifié de polyuréthane et de textile tissé, et peut être utilisé comme contenant de récupération pour récupérer des fluides accidentellement renversés, par exemple de l'eau, de l'huile, des produits chimiques ou d'autres fluides dangereux.

9. Contenant selon la revendication 1, dans lequel le contenant interne (12), est fabriqué en une matière appropriée qui résiste aux produits chimiques telle que le Téflon.

10. Contenant selon la revendication 1, dans lequel la vanne de vidange (14) permet alternativement le raccordement d'accessoires supplémentaires tels qu'un bouchon ou un couvercle de fermeture (17) avec sa corde/bande amovible.
